# FASCICULE DE BREVET EUROPEEN

(11) **EP 0 360 947 B1**
(45) Date de publication et mention de la délivrance du brevet: **30.11.1994**
(21) Numéro de dépôt: 88810674.7
(22) Date de dépôt: 30.09.1988
(51) Int. Cl.: B23B 31/08

(54) **Pince destinée à porter un outil notamment un outil d'usinage**
Spannzange zum Halten eines Werkzeuges, insbesondere einer Schneidwerkzeuges
Collet to hold a tool, especially a cutting tool

(43) Date de publication de la demande: 04.04.1990
(73) Titulaire: PCM WILLEN S.A. Outillages de précision, CH-1844 Villeneuve (CH)
(72) Inventeur: Willen, Charles Gérard, CH-1844 Villeneuve (CH)
(74) Mandataire: Meylan, Robert Maurice

(56) Documents cités:
- DE-A- 1 552 495
- DE-A- 2 001 007
- GB-A- 1 066 486
- US-A- 1 702 810
- US-A- 4 021 133

## Description

La présente invention concerne une pince destinée à porter un outil d'usinage, notamment un outil de taraudage assujetti, d'une part, à un mouvement de rotation autour de son axe et, d'autre part, à un déplacement axial et destinée à être supportée par un porte-pince assemblé à un axe d'une machine-outil.

Un outil d'usinage assujetti d'une part, à un mouvement de rotation, et d'autre part, à un déplacement axial, mouvements qui lui sont impartis par la machine adéquate, est dans certains cas soumis à un mouvement axial propre résultant de la rotation de l'outil et du frottement sur la surface à usiner, ce qui est notamment le cas d'un taraud mais le même phénomène peut se présenter pour d'autres usinages.

La plupart des machines actuelles ne peuvent pas assurer une synchronisation exacte et constante du mouvement axial propre à l'outil, par exemple un taraud, par rapport au mouvement axial de la machine, en relation avec la rotation de la broche. L'amplitude du mouvement axial propre dans le cas d'un taraud est fonction du pas du taraud. En effet, même si les commandes numériques actuellement permettent une synchronisation exacte lors du taraudage, il se produit une désynchronisation plus ou moins grande au moment du renversement du sens de rotation, lorsque la profondeur du taraudage désirée est atteinte. Les différences dépendent des vitesses de rotation, et elles résultent également de la différence d'inertie entre la broche de la machine et le chariot ou l'élément assurant le mouvement axial imparti par la machine à l'outil, provoquant des accélérations ou décélérations respectives différentes. Même si les machines à commande numérique ont permis de supprimer les jeux mécaniques, qui sont une autre source de désynchronisation, un contrôle absolu constant durant le renversement du sens de rotation, nécessaire lors d'un taraudage, ne peut être assuré que par quelques rares machines. Le problème jusqu'à aujourd'hui a été résolu par des appareils spécifiques à tarauder de constructions très diverses absorbant eux-mêmes les différences des mouvements axiaux mais présentant l'inconvénient de n'être que des appareils à tarauder qui sont, d'une part, volumineux et, d'autre part, prévus uniquement pour le taraudage. Certains de ces appareils, avec ou sans renversement du sens de rotation incorporé, ont une course autonome sur le taraudage complet. Les machines à tarauder sont parfois munies d'un système mécanique assurant une synchronisation constante acceptable à basses ou moyennes vitesses appelé "patronne".

Habituellement, un outil d'usinage est monté sur la broche de la machine par l'intermédiaire d'un porte-pince présentant une queue de forme et dimension adéquate. La queue de l'outil est montée dans une pince de serrage montée de son côté sur le porte-pince. Le serrage de la pince est obtenu lors de sa mise en place dans le porte-pince au moyen d'un écrou qui assure le serrage radial de la pince sur l'outil et empêche le déplacement axial de la pince et de l'outil. Lors d'un travail de taraudage, on retire le porte-pince et on le remplace par un porte-pince ou appareil de taraudage, comprenant une compensation axiale. Le taraud est monté dans le porte-pince à compensation axiale par une pince identique ou similaire aux pinces utilisées pour la mise en place des autres outils d'usinage.

Un appareil de taraudage avec une pince intégrée est décrit dans le US-A-1 702 810. Il est constitué d'un premier corps extérieur muni d'une queue pour être monté sur l'axe d'une machine, d'un deuxième corps intérieur déplaçable axialement à l'intérieur d'un alésage du premier corps et lié en rotation avec le premier corps par une goupille. Des moyens limitent le déplacement axial du deuxième corps et un ressort le rappelle à une position de repos. Le deuxième corps présente à l'extrémité se trouvant à l'extérieur du premier une douille fendue axialement destinée à recevoir la queue du taraud. Un écrou collabore avec un pas de vis extérieur à la douille pour assurer la tenue du taraud. La tenue du taraud est assurée par l'extrémité du deuxième corps, tandis que la compensation axiale est assurée par la partie postérieure du second corps en collaboration avec le premier corps.

Il existe des appareils de taraudage et aussi des porte-outils à changement rapide avec des embouts interchangeables de plusieurs types. Ces embouts peuvent assurer plusieurs fonctions mais jamais une compensation axiale incorporée dans le volume de l'embout intechangeable de base. D'autre part, l'embout s'ajoute à son support, ce qui agumente la longueur de l'encombrement total.

La présente invention a pour but de proposer une pince porte-outil permettant une compensation automatique des différences des mouvements axiaux d'un taraud, évitant la nécessité d'utiliser des appareils spéciaux et encombrants, notamment avec des machines automatique à commande numérique.

La pince selon la présente invention est définie par la revendication 1.

En dotant la pince porte-outil d'un corps extérieur dont la forme correspond à une pince habituelle destinée à être supportée par un porte-pince connu, en disposant dans un alésage de ce corps une douille qui tiendra l'outil d'usinage et pouvant effectuer un déplacement axial à l'intérieur de l'alésage du corps extérieur entre des limites prédéterminées à l'encontre des moyens élastiques déformables rappelant la douille à une position de repos prédéterminée, on obtient une compensation axiale automatique d'une amplitude qui est bien sûre limitée par la construction et les dimensions de la pince. Les surfaces polygonales mâles et femelles permettent d'assurer à l'intérieur d'un petit volume la liaison cinématique du corps extérieur avec la douille de manière efficace, ainsi que le guidage axial.

Cette compensation par rapport à la position de repos de la douille peut être faite dans un sens ou dans un autre ou dans les deux comme ceci sera expliqué dans la description.

Les avantages de cette pince à compensation axiale incorporée sont les suivants :
La pince de l'invention permet d'assurer en plus de la fonction de serrage au moyen des vis radiales la fonction de la compensation axiale unie ou bidirectionnelle dans le même volume que celui des pinces standard qui assurent uniquement le serrage de l'outil. Elle se monte à l'intérieur des porte-pinces standard sans qu'une adaptation soit nécessaire et sans augmenter la longueur de l'encombrement comme c'est le cas avec les embouts interchangeables;
il n'est plus nécessaire de fixer la pince de serrage dans des appareils spécifiques spéciaux et encombrants pour la compensation du déplacement axial différencié entre l'outil d'usinage et le déplacement axial auquel il est assujetti par la machine d'usinage;
l'opération d'usinage, notamment un taraudage, peut être réalisé avec des porte-pinces standard de différentes longueurs et grandeurs permettant de s'adapter ainsi aux configurations variées des pièces à usiner beaucoup mieux qu'avec des appareils conventionnels;
il est très économique et pratique de pouvoir utiliser les mêmes porte-pinces pour des opérations similaires, par exemple, le perçage, le fraisage et le taraudage;
avec les tours CNC à 3, 4 ou 5 axes commandés voire davantage, les opérations de taraudage sont, fréquemment, à exécuter dans un alignement et une direction différente de l'axe de la pièce tournée et il est fréquent d'avoir à réaliser plusieurs taraudages radiaux ou axiaux, voire obliques sur la même pièce et dans ce cas des appareils spécifiques appelés porte-outils entraînés, assurent les fonctions de perçage, fraisage et taraudage. Les porte-outils entraînés de taraudage devant permettre une compensation axiale sont de construction comme mentionné précédemment relativement compliquée; ils sont coûteux et encombrants et ne peuvent servir qu'au taraudage. La pince de taraudage selon l'invention permet de réaliser cette dernière opération avec les porte-outils de perçage ou fraisage en rendant ainsi inutile une mise en place particulière d'un appareil spécifique complet pour le taraudage;
la pince porte-outil selon l'invention simplifie également l'équipement d'un atelier en porte-outil et apporte à l'utilisateur une grande souplesse d'utilisation car, les machines ayant des attachements divers pour les porte-outils, ceux-ci ne peuvent passer d'une machine à l'autre que d'une manière relativement limitée, ce qui n'est pas le cas pour les pinces selon l'invention qui n'est pas liée à l'attachement du porte-outil et peuvent donc équiper n'importe quelle machine. Ce système de pince offre ainsi la possibilité de rationnaliser quasi complètement l'équipement d'un atelier concernant différents travaux d'usinage effectués notamment sur les tours CNC, les centres d' usinage et les fraiseuses CNC. Donc l'avantage économique est considérable.

La conception de la pince fait d'elle un accessoire simple et robuste qui résiste pratiquement sans dommage aux fausses manoeuvres ou accidents pouvant intervenir, seuls les moyens assurant le tenue de l'outil, qui sont de préférence des vis disposées radialement dans la douille, sont parfois à remplacer et bien sûr l'outil d'usinage lui-même.

Selon une autre variante ces moyens peuvent être des surfaces dentées conjugées prévues sur la surface extérieure de la douille et l'alésage.

Selon une autre exécution deux plats conjugués prévus sur la surface extérieure de la douille et l'alésage assurent la liaison cinématique entre le corps extérieur et la douille.

Selon une autre exécution le déplacement axial de la douille à l'intérieur de l'alésage est limité, d'une part, par une pièce rapportée fixée sur l'extrémité de la douille et, d'autre part, par des épaulements respectifs et conjugués prévus dans l'alésage et la douille.

Les moyens déformables élastiquement peuvent être soit des ressorts, soit des rondelles élastiques soit un corps en matière déformable élastiquement.

Selon une autre variante, si une compensation axiale doit être prévue dans les deux sens, des moyens élastiques antagonistes doivent être prévus pour assurer le rappel de la douille à sa position de repos prédéterminée.

L'invention sera décrite plus en détail à l'aide du dessin annexé représentant deux exécutions préférées de l'invention.

La figure 1 est une vue en coupe partielle axiale d'une première exécution de l'invention.

La figure 2 est une vue en coupe axiale d'une deuxième exécution de l'invention.

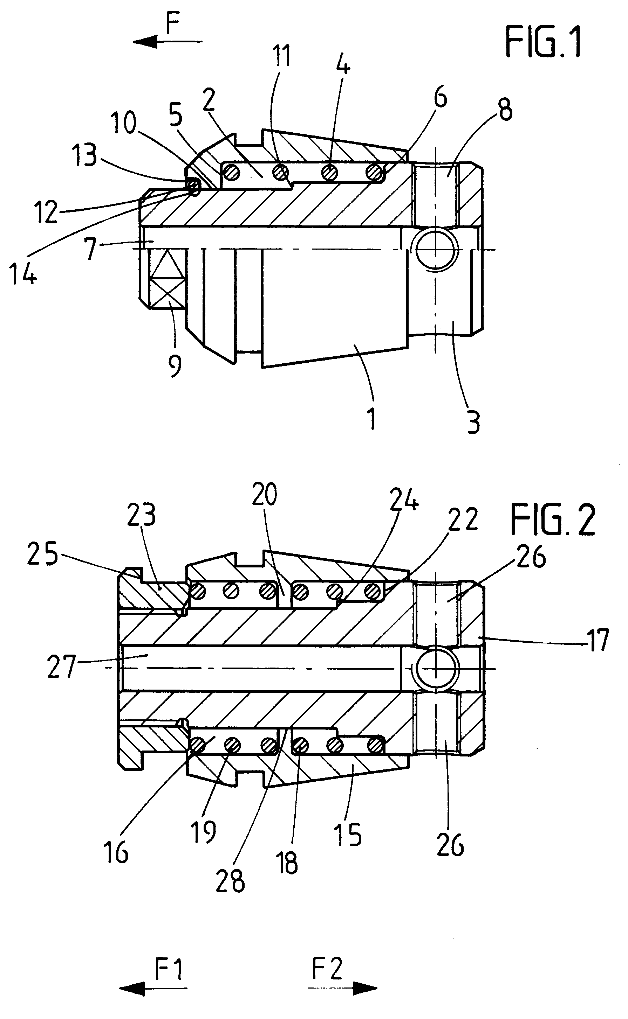

La pince de la figure 1 est prévue pour une compensation du déplacement axial uniquement dans une direction soit celle indiquée par la flèche F.

Elle est constituée par trois éléments essentiels à savoir : un corps extérieur 1 muni d'un alésage 2 à l'intérieur duquel est disposée une douille 3 et, un ressort 4 disposé entre la douille 3 et l'alésage 2 contre un épaulement 5 de l'alésage 2 et un épaulement 6 de la douille. La construction en général de la pince et plus précisément du corps extérieur 1 n'est pas liée à un type ou une forme de pince particulière et elle est semblable ou pour le moins compatible aux pinces de serrage existant sur le marché. Elle permet la fixation de l'outil d'usinage dont la queue correspond à l'alésage 7 de la douille 3 et elle est serrée par des vis 8 disposées radialement sur la partie arrière de la douille 3 et agissant sur le carré entraîneur ou sur un ou plusieurs plats usinées sur la queue de l'outil.

La liaison cinématique en rotation entre le corps extérieur 1 et la douille 3 est obtenue au moyen d'une première surface prismatique 9 de la douille avec une surface prismatique correspondant 10 du corps extérieur 1. Ces mêmes surfaces servent au guidage axial, lors du déplacement de compensation, de la douille 3 à l'intérieur du corps 1. Le déplacement autonome maximum de la douille 3 à l'intérieur du corps 1 est déterminé, d'une part, par un épaulement 11 de la douille qui vient en butée contre l'épaulement 5 de l'alésage, et, d'autre part, par un anneau 12 fixé dans une gorge de la douille 3 et lequel en position de repos vient en butée contre la face intérieure du corps 1 et notamment vient se buter au fond d'un logement 13.

Au lieu d'utiliser les surfaces prismatiques pour assurer la liaison cinématique en rotation entre le corps 1 et la douille 3, d'autres moyens peuvent être envisagés telles que des clavettes, des profils dentés, des billes roulant dans des rainures axiales, ou inclinées ou hélicoïdales ménagées, d'une part, sur la surface extérieure de la douille et, d'autre part, à l'intérieur de l'alésage. En lieu et place du ressort 4, on peut utiliser des rondelles élastiques ou un corps en matière déformable élastiquement.

Le fonctionnement de la pince de la figure 1 avec un taraud est le suivant : on règle l'avance linéaire de la machine de sorte qu'elle soit légèrement inférieure, à l'avance propre du taraud, qui est définie, d'une part, par la vitesse de rotation et, d'autre part, le pas de l'hélice du taraud. Ainsi lors de l'usinage le taraud effectue un déplacement de compensation propre, c'est-à-dire que la douille 3 se déplace dans le sens F au fur et à mesure de l'opération de taraudage. A la fin du taraudage, lors du renversement de la rotation, une désynchronisation peut avoir lieu entre l'avance axiale imposée par la machine et l'avance propre du taraud et elle est compensée par la possibilité de la douille de se déplacer dans un sens ou dans un autre. L'avance de la machine est réglée de préférence à 95% de l'avance propre du taraud, ainsi au moment du renversement synchronisé de la rotation de la broche et du mouvement d'avance on se trouve approximativement au milieu de la course de compensation. Le mouvement de retour de la machine est réglé à la valeur du mouvement du retour propre au taraud pour que la pince de serrage reste bien dans sa course de compensation évitant toute contrainte sur le taraud. Plus la course de compensation de la pince est longue plus facile est l'opération de réglage. En fonction des caractéristiques des machines et de la vitesse de taraudage une temporisation peut être nécessaire lors du renversement de la rotation et de l'avance linéaire.

A la figure 2, est représentée une pince porte-outil comprenant un corps extérieur 15 muni d'un alésage 16 à l'intérieur duquel se déplace une douille 17 et deux ressorts 18 et 19 antagonistes permettant le déplacement axial de la douille 17 à partir de la position de repos dans les deux directions F1 ou F2. Le ressort 18 est logé à l'intérieur de l'alésage et il s'appuie d'un côté sur un épaulement 20 du corps 15 et de l'autre côté sur un épaulement 22 de la douille 17. Le ressort 19 s'appuie sur l'autre face de l'épaulement 20 du corps 15 et contre un anneau 23 vissé sur l'extrémité de la douille 17. Le déplacement axial maximum dans la direction F1 est limité par l'épaulement 24 de la douille 17 contre lequel l'épaulement 20 vient en butée. Dans la direction F2 le déplacement est limité par l'épaulement 25 de l'écrou 23 contre lequel vient en butée la partie antérieure du corps extérieur 15. La liaison cinématique en rotation entre le corps extérieur 15 et la douille 17 peut également être réalisée par des surfaces prismatiques conjuguées réalisées respectivement à la partie postérieure du corps extérieur 15 et de la douille ou au niveau de la portée médiane 28. Des vis 26 disposées radialement tiennent la queue de l'outil à l'intérieur de l'alésage 27 de la douille 17.

## Revendications

1. Pince destinée à porter un outil d'usinage, notamment un outil de taraudage, assujetti, d'une part, à un mouvement de rotation autour de son axe et, d'autre part, à un déplacement axial et destinée à être supportée par un porte-pince assemblé à un axe d'une machineoutil, ladite pince comprend un corps extérieur (1; 15) muni d'un alésage cylindrique (2, 16) et dont la forme extérieure est conjuguée à la forme du porte-pince et une douille (3, 17) liée cinématiquement en rotation au corps extérieur par des moyens, ladite douille (3, 17) étant mobile axialement à l'intérieur de l'alésage (2; 16) et munie de moyens (8; 26) pour tenir l'outil d'usinage, ledit alésage (2; 16) du corps extérieur (1; 15) comprend au moins une surface polygonale femelle (10) collaborant avec au moins une surface polygonale mâle (9) de la douille (3; 17) dans le but de lier cinématiquement en rotation le corps extérieur (1; 15) et la douille (3; 17) et assurer également le guidage axial de ladite douille à l'intérieur dudit corps, et des moyens (5, 11, 12; 20, 24, 25) limitant le déplacement axial de la douille (3; 17) à l'intérieur de l'alésage (2; 16), des moyens déformables élastiquement (4; 18, 19) étant prévus pour rappeler la douille (3; 17) à une position de repos prédéterminée, lesdits moyens pour tenir l'outil d'usinage étant des vis radiales (8; 26).

2. Pince selon la revendication 1, caractérisée par le fait que les moyens liant cinématiquement en rotation le corps extérieur (1; 15) et la douille (3; 17) comprennent des profils dentés conjugués formés respectivement sur une partie de la surface extérieure de la douille et à l'intérieur de l'alésage du corps extérieur.

3. Pince selon la revendication 1, caractérisée par le fait que les moyens liant cinématiquement en rotation le corps extérieur (1; 15) et la douille (3; 17) sont formés par deux plats conjugués formés sur la surface extérieure de la douille et la surface de l'alésage du corps extérieur.

4. Pince selon l'une des revendications 1 à 3, caractérisée par le fait que les moyens limitant le déplacement axial de la douille (3; 17) à l'intérieur de l'alésage (2; 16) comprennent pour la limitation dans un sens une pièce rapportée (12; 23) fixée sur la douille (3; 17) et pour la limitation dans le sens opposé un épaulement intérieur (5; 20) de l'alésage (2; 16) du corps extérieur collaborant avec un épaulement (11; 24) de la douille.

5. Pince selon l'une des revendications 1 à 4, caractérisée par le fait que les moyens déformables élastiquement (18, 19) sont antagonistes pour permettre le déplacement axial de la douille (17) dans deux sens opposés (F1, F2) par rapport à sa position de repos prédéterminée.

6. Pince selon l'une de revendications 1 à 5, caractérisée par le fait que les moyens déformables élastiquement sont des ressorts hélicoïdaux.

7. Pince selon l'une des revendications 1 à 5, caractérisée par le fait que les moyens déformables élastiquement sont des rondelles élastiques.

8. Pince selon l'une des revendications 1 à 5, caractérisée par le fait que les moyens déformables élastiquement sont constitués de blocs d'une matière déformable élastiquement.

## Claims

1. Collet intended to carry a cutting tool, particularly a tapping tool, which is subjected on the one hand to a rotary movement about its axis, and on the other hand to an axial displacement, and intended to be supported by a collet holder mounted on a spindle of a machine-tool, the said collet comprises an external body (1; 15) provided with a cylindrical bore (2; 16) the external shape of which matches the shape of the collet holder and a socket (3; 17) coupled with the external body for rotary movement by means, the said socket (3; 17) being movable axially within the bore (2; 16) and provided with means (8; 26) for holding the cutting tool, the said bore (2; 16)) of the external body (1; 15) comprises at least a polygonal female surface (10) cooperating with at least a polygonal male surface (9) of the socket (3; 17) aimed to couple the external body (1; 15) and the socket (3; 17) together for rotary movement and provide also the axial guidance of the said socket within the said body, and means (5, 11, 12; 20, 24, 25) limiting the axial displacement of the socket (3; 17) within the bore (2; 16), resiliently deformable means (4; 18, 19) being provided for returning the socket (3; 17) to a predetermined rest position the said means to hold the tool being radial screws (8, 26).

2. The collet as claimed in claim 1, wherein the means coupling the external body (1; 15) and the socket (3; 17) together for rotary movement comprise matching toothed outlines formed respectively on part of the external surface of the socket and within the bore in the external body.

3. The collet as claimed in claim 1, wherein the means coupling the external body (1; 15) and the socket (3; 17) together for rotary movement are constituted by two matching flat surfaces formed on the external surface of the socket and on the surface of the bore in the external body.

4. The collet as claimed in one of claims 1 to 3; wherein the means limiting the axial displacement of the socket (3; 17) within the bore (2; 16) comprise, for limitation in one direction an added component (12; 23) arranged on the socket (3; 17), and for limitation in the opposite direction an internal shoulder (5; 20) in the bore (2; 16) in the external body, cooperating with a shoulder (11; 24) on the socket.

5. The collet as claimed in one of claims 1 to 4, wherein the resiliently deformable means (18, 19) are opposed to each other, to permit axial displacement of the socket (17) in two opposite directions (F1, F2) in relation to its predetermined rest position.

6. The collet as claimed in one of claims 1 to 5, wherein the resiliently deformable means are helical springs.

7. The collet as claimed in one of claims 1 to 5, wherein the resiliently deformable means are resilient washers.

8. The collet as claimed in one of claims 1 to 5, wherein the resiliently deformable means are constituted by blocks of a resiliently deformable material.

## Patentansprüche

1. Spannzange zum Halten eines Schneidwerkzeuges, insbesondere eines Gewindeschneidwerkzeuges, welches einerseits einer Drehbewegung um seine Achse und andererseits einer axialen Bewegung unterworfen ist, die dazu bestimmt ist, durch einen Zangenhalter getragen zu werden, welcher auf der Achse einer Werkzeugmaschine montiert ist, wobei die genannte Spannzange einen äusseren Körper (1; 15) mit einer zylindrischen Bohrung (2; 16), dessen äussere Form der Form des Zangenhalters entspricht, und eine Hülse (3; 17), die kinematisch mit dem äusseren Körper durch Mittel drehverbunden ist, aufweist, wobei die genannte Hülse (3; 17) im innern der Bohrung (2; 16) axial bewegbar ist und Mittel (8; 26) aufweist, um das Schneidwerkzeug zu halten , wobei die genannte Bohrung (2; 16) des äusseren Körpers (1 ;15) wenigstens eine polygonale Mutterfläche aufweist, die mit wenigstens einer polygonalen Einsteckfläche der Hülse (3; 17) zusammenwirkt, um den äusseren Körper (1; 15) und die Hülse (3; 17) kinematisch in Drehung zu verbinden und ebenfalls die axiale Führung der genannten Hülse im Innern des genannten Körpers zu gewährleisten, und Mittel (5, 11, 12; 20, 24, 25), die die axiale Bewegung der Hülse (3; 17) im Innern der Bohrung (2; 16) begrenzen, wobei elastisch verformbare Rückstellmittel (4; 18, 19) zu einer vorbestimmten Ruhestellung für die Hülse (3; 17) vorgesehen sind, wobei die genannten Mittel zum Halten des Schneidwerkzeuges radiale Schrauben (8; 26) sind.

2. Spannzange gemäss Anspruch 1, dadurch gekennzeichnet, dass die Mittel, die den äusseren Körper (1; 15) und die Hülse (3; 17) kinematisch in Drehung verbinden, konjugierte gezahnte Profile aufweisen, die jeweils auf einem Teil der äusseren Fläche der Hülse und im Inneren der Bohrung des äusseren Körpers gebildet sind.

3. Spannzange gemäss Anspruch 1, dadurch gekennzeichnet, dass die Mittel, die kinematisch den äusseren Körper 1; 15) und die Hülse (3; 17) in Drehung verbinden, aus zwei konjugierten Flächen bestehen, die auf der äusseren Fläche der Hülse und auf der Bohrungsfläche des äusseren Körpers gebildet sind.

4. Spannzange gemäss einem der Ansprüche 1 bis 3, dadurch gekennzeichnet, dass die Mittel, die die axiale Bewegung der Hülse (3; 17) im Innern der Bohrung (2; 16) begrenzen, ein zusammengesetztes, auf der Hülse befestigtes Teil (12; 23) zur Begrenzung in die eine Richtung und zur Begrenzung in die entgegengesetzte Richtung eine innere Schulter (5; 20) der Bohrung (2; 16) des äusseren Körpers, die mit einer Schulter (11; 24) der Hülse zusammenwirkt, aufweisen.

5. Spannzange gemäss einem der Ansprüche 1 bis 4, dadurch gekennzeichnet, dass die elastisch verformbaren Mittel (18, 19) entgegengesetzt wirken, um die axiale Bewegung der Hülse in zwei entgegengesetzte Richtungen (F1, F2) zu erlauben, bezogen auf ihre vorbestimmte Ruhestellung.

6. Spannzange gemäss einem der Ansprüche 1 bis 5, dadurch gekennzeichnet, dass die elastisch verformbaren Mittel Schraubenfedern sind.

7. Spannzange gemäss einem der Ansprüche 1 bis 5, dadurch gekennzeichnet, dass die elastisch verformbaren Mittel elastische Unterlegscheiben sind.

8. Spannzange gemäss einem der Ansprüche 1 bis 5, dadurch gekennzeichnet, dass die elastisch verformbaren Mittel aus Blöcken eines elastisch verformbaren Materials bestehen.
